Europäisches Patentamt

(19) European Patent Office

Office européen des brevets

(11) EP 0 937 587 A2

(12) EUROPEAN PATENT APPLICATION

(43) Date of publication:
25.08.1999 Bulletin 1999/34

(51) Int. Cl.$^6$: B60C 9/02

(21) Application number: 99102589.1

(22) Date of filing: 11.02.1999

(84) Designated Contracting States:
AT BE CH CY DE DK ES FI FR GB GR IE IT LI LU
MC NL PT SE
Designated Extension States:
AL LT LV MK RO SI

(30) Priority: 19.02.1998 US 26318

(71) Applicant:
THE GOODYEAR TIRE & RUBBER COMPANY
Akron, Ohio 44316-0001 (US)

(72) Inventors:
• Bhagwat, Anand Waman
  Hudson, Ohio 44236 (US)
• Prakash, Amit
  Hudson, Ohio 44236 (US)
• Woods, Terry Kenneth
  Canton, Ohio 44708 (US)

(74) Representative: Leitz, Paul
Goodyear Technical Center-Luxembourg
Patent-Department
L-7750 Colmar-Berg (LU)

(54) Radial tires containing strands of untwisted steel filaments in the carcass ply

(57) The present invention relates to a pneumatic radial tire (10) wherein the carcass ply (12) contains a rubberized layer of steel strands (30) of untwisted fila- ments (42,44,46,48,50,52).

FIG-1

EP 0 937 587 A2

**Description**

Technical Field

The present invention relates to a radial tire containing strands of untwisted steel filaments in the carcass ply of the tire.

Background of the Invention

Conventionally, the carcass of radial pneumatic tires for use in passenger and light truck applications have polyester filaments embedded therein. These filaments are woven into cords to increase the strength of the carcass ply. It has also been known to use monofilaments made of fiberglass or polyester in the tire; however, due to the inherent properties of these synthetic polymers, the strength requirements needed for the carcass are unmet. Thus, commercially the use of the polyester cord in the carcass has dominated. Unfortunately, as a result of using cord in a carcass, the weight contributed to the tire from the cord is high. With the ever present desire of auto manufacturers to increase the mileage requirements of their vehicles, there is a large demand for lighter tires without sacrificing their strength integrity.

For most passenger and light truck tires, a minimum carcass strength of 1700 N/cm is expected. At the same time, the filament diameter of 0.35 mm or smaller is favorable to keep bending stress low. Under these boundaries, several filaments have to be cabled or bundled together to maintain satisfactory rivet for rubber coverage. Cabling filaments together, however, lowers the modulus. Hence, to maximize the modulus and to accommodate enough filament, the proposed invention is directed.

Summary of the Invention

The present invention relates to a pneumatic radial tire having a carcass ply which comprises a layer of steel strands of untwisted steel filaments. The advantages of the present invention include a tire which not only maintains excellent handling characteristics, typical of increased modulus and temperature stability of carcass ply cords, but does so without significant weight aspects.

Brief Description of the Drawing

Figure 1 shows a pneumatic tire in partial sectional view.
Figure 2 illustrates a radial cross-section through a radial carcass tire.
Figure 3 is a fragmentary sectional view of a steel strand at Location A of Figure 2.
Figure 4 is a fragmentary sectional view of a steel strand at Location B of Figure 2.
Figure 5 is a fragmentary sectional view of a steel strand at Location C of Figure 2.
Figure 6 illustrates a radial cross-section through a radial carcass tire.

Detailed Description of the Invention

There is disclosed a pneumatic radial tire comprising

(a) a pair of axially spaced-apart annular beads; and
(b) at least one carcass ply which extends between said beads wherein said carcass ply comprises a layer of steel strands arranged so as to have from 4 to 50 ends per inch when measured in a tire circumferential direction at a location having a tire maximum width,
each said strand having

(1) from 2 to 12 filaments;
(2) the diameter of each filament ranging from 0.05 to 0.4 mm;
(3) the tensile strength of each filament of at least (3000 MPa - (2000 x D)) x 95 percent where D is the filament diameter in millimeters; and
(4) the filaments within each strand are not twisted.

As used herein and in the claims:

"Axial" and "axially" are used herein to refer to lines or directions that are parallel to the axis of rotation of the tire.

"Bead" means that part of the tire comprising an annular tensile member attached to or wrapped by ply cords and shaped, with or without other reinforcement elements such as flippers, chippers, apexes, toe guards and chafers, to fit the design of the tire rim.

"Belt structure" means at least two rubber reinforced annular layers of plies of parallel cords, underlying the tread, unanchored to the bead, and having both left and right cord angles in the range from 10 to 30 degrees with respect to the equatorial plane (EP) of the tire.

"Carcass" means the tire structure apart from the belt structure, the tread and the undertread, but including the beads. The carcass ply includes strands of untwisted filaments or reinforcing cords embedded in an elastomeric substance and that these components are considered to be a single entity. The "main portion of the carcass ply" means the portion of the carcass ply which extends between the bead cores.

"Cord" means one or more of the reinforcement elements, formed by one or more filaments/wires which are twisted together having a lay length less than infinity.

"Crown" means that portion of the tire within the width limits of the tire tread.

"Equatorial plane (EP)" means the plane perpendicular to the tire's axis of rotation and passing through the center of the tire's tread.

"Load Range" means load and inflation limits for a given tire used in a specific type of service as defined by tables in The Tire and Rim Association, Inc, 1995 Year Book.

"Ply" means a continuous layer of rubber-coated parallel filaments or cords.

"Pneumatic tire" means a laminated mechanical device of generally toroidal shape (usually an open-torous) having beads, a carcass ply and a tread.

"Tread" means a molded rubber component which, when bonded to a tire casing, includes that portion of the tire that comes into contact with the road when the tire is normally inflated and under normal load.

"Prefix Letters" means those identifications used and defined in The Tire and Rim Association, Inc, 1995 Year Book.

"Radial" and "radially" are used to mean directions radially perpendicular from the axis of rotation through the tire.

"Radial-ply tire" means a belted or circumferentially restricted pneumatic tire in which the carcass ply reinforcements which extend from bead to bead are laid at angles between 75° and 105° with respect to the equatorial plane of the tire.

"Rivet" means the open space between cords or strands in a layer.

"Tensile strength" is determined by ASTM E8M-93 as applied to steel wire product.

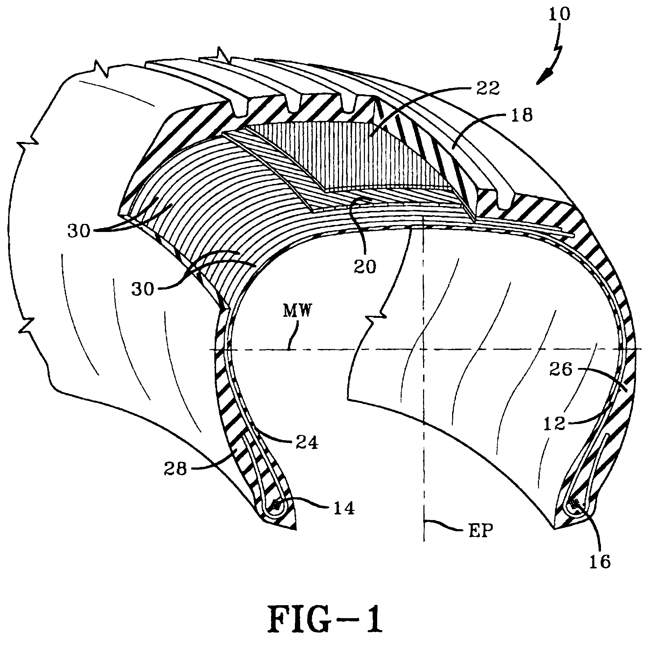

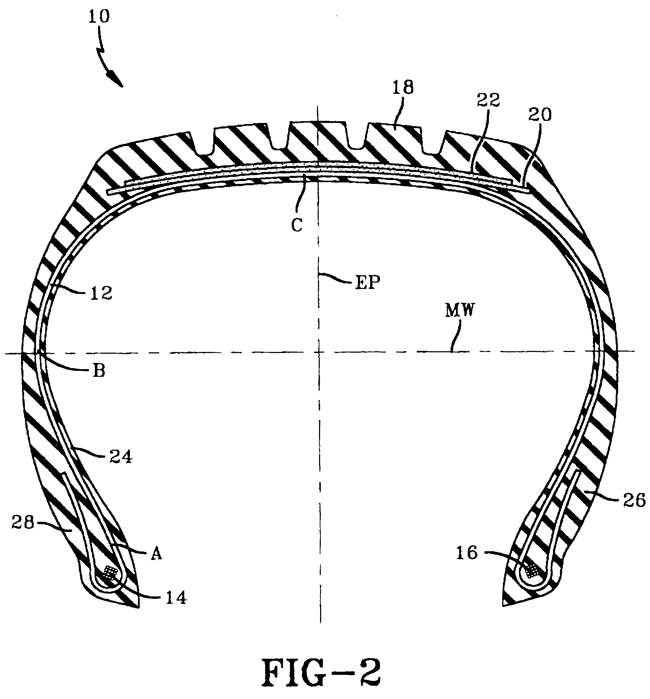

Referring to Figures 1 and 2, the present invention relates to a pneumatic tire 10. "Pneumatic tire" means a laminated mechanical device of generally toroidal shape (usually an open-torus) having beads, at least one carcass ply and a tread. When mounted on the wheel of a motor vehicle, the tire through its tread provides traction and contains the fluid that sustains the vehicle load. More specifically, the present invention relates to a radial-ply tire. Radial-ply tire means a belted or circumferentially-restricted pneumatic tire in which the carcass ply reinforcement which extend from bead to bead are laid at angles between 75° and 105° with respect to the equatorial plane of the tire.

The pneumatic tire 10 has a carcass ply 12 incorporating a plurality of steel strands of untwisted filaments. In those instances when one desires to utilize the essence of the present invention for larger size tires, two or more carcass ply may be used.

The pneumatic tire 10 has a pair of axially spaced-apart annular beads 14, 16. The carcass ply 12 extends between the beads 14, 16. The pneumatic tire 10 has a conventional tread 18 disposed on the crown of the carcass 12. The pneumatic tire 10 has a belt structure comprising at least two belts 20, 22. It is understood that the particular belt structure illustrated in Figures 1 and 2 and described herein is merely an example used in the preferred embodiment and that a tire designer may employ any arrangement of belt plies in accordance with the performance requirements of the particular tire while still practicing the present invention. For example, in those instances where a larger tire is being constructed for use in a radial light truck application, three or more belts may be used. In addition, the cords in the belt plies may be rayon, polyester, glass fiber, aramid, steel wire or the like. Preferably, the cord is steel wire. Conventional diameters and cords may be used in conjunction with the present invention.

If the tire is of the tubeless variety, a substantially air impervious layer 24 is disposed inwardly of the carcass ply 12 and contiguous to an inflation chamber defined by the volume bounded by the tire 10 and rim assembly (not shown). Most preferably a barrier layer (not shown) is disposed between the air impervious layer 24 and the carcass ply 12. The barrier ply functions to separate the air impervious layer from the elastomeric layer in which the steel strands of untwisted filaments of the carcass ply 12 are embedded. Elastomeric sidewalls 26, 28 are disposed axially outwardly of the carcass structure.

The carcass ply 12 has a layer of steel strands 30 of untwisted filaments arranged so as to have from 4 to 50 ends per inch when measured in a tire circumferential direction at a location having a tire maximum width (MW). Preferably, the layer of steel strands 30 are arranged so as to have 7 to 15 ends per inch at the location having a tire maximum width MW. In a particularly preferred tire, the layer of steel strands 30 are arranged so as to have 8 to 14 ends per inch at the location having a tire maximum width MW. The above calculations for ends per inch are based upon the range of diameters for the strand, diameter of the filament, strength of the strand, strength of the filament, rivet and the practical strength requirement for the carcass ply. For example, the high number of ends per inch would include the use of a lower diameter strand for a given strength versus a lower number of ends per inch for a higher diameter strand for the same strength. In the alternative, if one elects to use a strand of a given diameter, one may have to use more or less ends per inch depending on the tensile strength of the filaments.

The diameter of each filament in the strand may vary from 0.05 to 0.4 mm. Preferably, the diameter of each strand will be from 0.15 to 0.3 mm.

The number of filaments in each strand will range from 2 to 12 filaments. Preferably, the number of filaments in each strand range from 3 to 7.

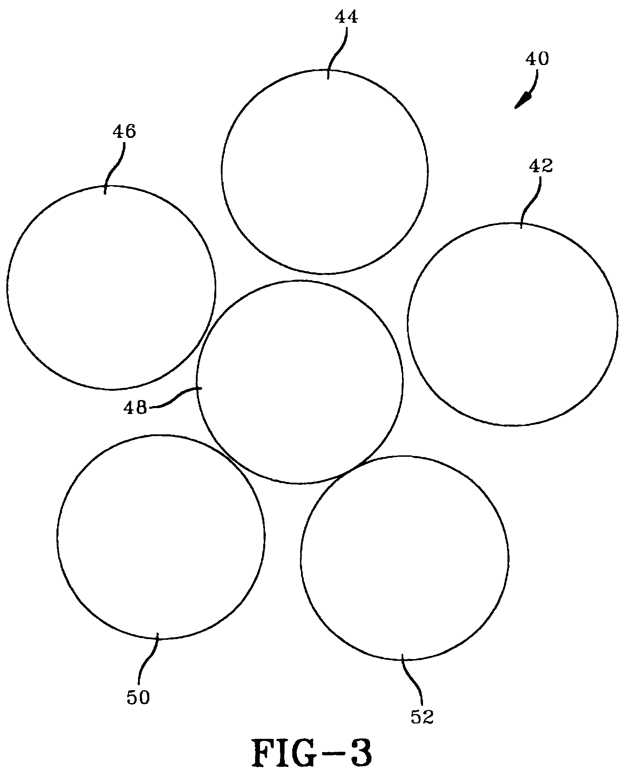

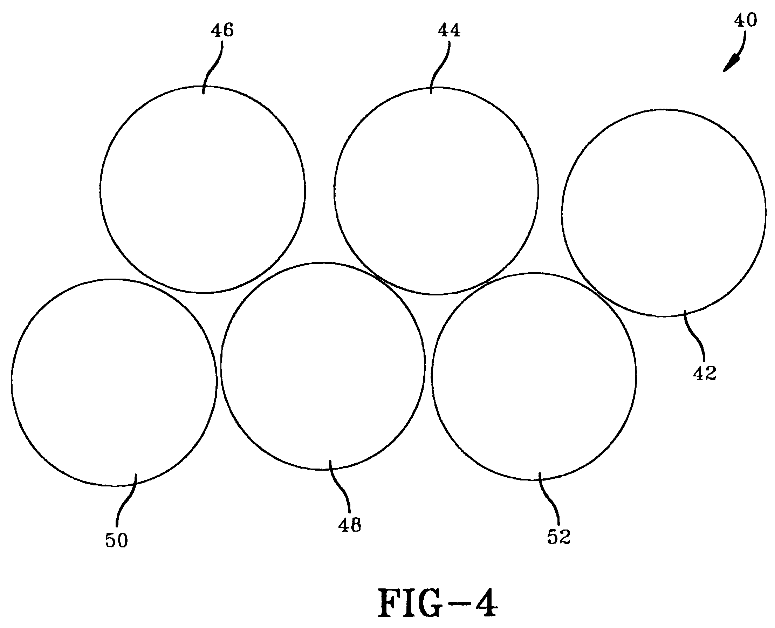

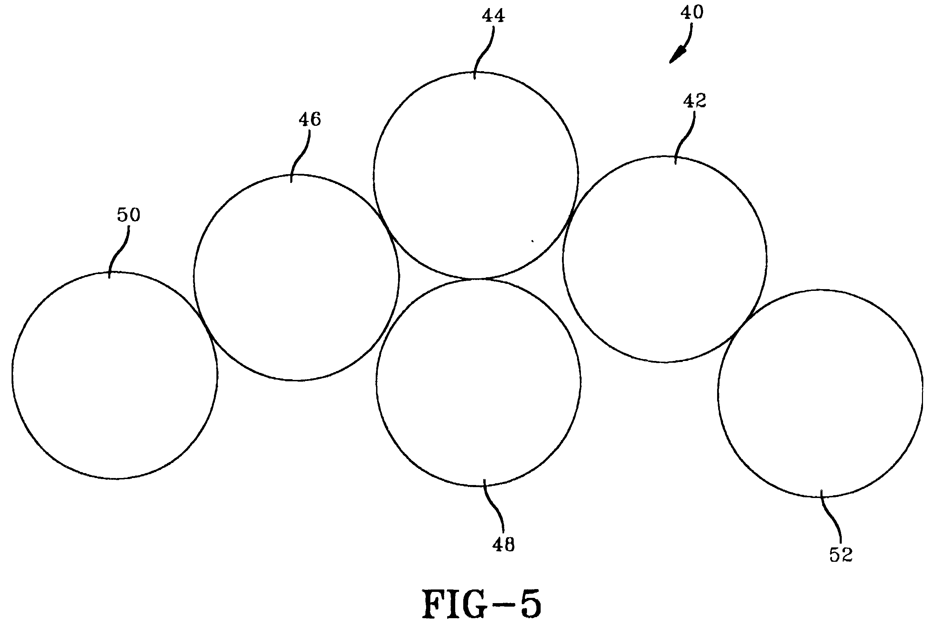

Because the strands used in the present invention have untwisted filaments, such filaments may migrate relative to each other. All of the filaments are, however, substantially parallel to each other. Therefore, the cross-sectional profile (as measured in a circumferential direction) of the strand may vary along the ply. For example, at Location A of Figure 2, the cross-sectional profile of a strand of six untwisted filaments may be as shown in Figure 3. As shown in Figure 3, the strand 40 contains six filaments 42,44,46,48,50 and 52. At Location B of Figure 2, the cross-sectional profile of a strand of six untwisted filaments may be as shown in Figure 4. As shown in Figure 4, the strand 40 contains six filaments 42,44,46,48,50 and 52. At Location C of Figure 2, the cross-sectional profile of a strand of six untwisted filaments may be as shown in Figure 5. As shown in Figure 5, the strand 40 contains six filaments 42,44,46,48,50 and 52.

The pneumatic tire 10 of the present invention is characterized by the use of strands of untwisted filaments, each having high tensile strength values. Each filament for use in the strands have a tensile strength of at least (3000 MPa -(2000 x D)) x 95 percent where D is the filament diameter in millimeters. Preferably, the tensile strength of each filament is at least (4080 MPa - (2000 x D)) x 95 percent. In fact, tensile strengths greater than (4400 MPa - (2000 x D)) x 95 percent can be used. As known to those skilled in the art, tensile strength of an individual filament is generally measured according to ASTM E8M-90a.

There are a number of metallurgical embodiments which result in the tensile strength defined above. One way of achieving such strength is by merging the proper processes and alloys as disclosed in US-A- 4 960 473 and 5 066 455 which are hereby incorporated by reference in its entirety herein, with a steel rod microalloyed with one or more of the following elements: Ni, Cr, Nb, Si, Mo, Mn, Cu, Co, V and B. The preferred chemistry is listed below in weight percentages:

| C | 0.70 to 1.0 |
|---|---|
| Mn | 0.30 to 0.50 |
| Si | 0.10 to 0.30 |
| Cr | 0 to 0.4 |
| V | 0 to 0.1 |
| Cu | 0 to 0.5 |
| Ni | 0 to 0.5 |
| Co | 0 to 0.1 |

the balance being iron and residuals. The resulting rod is then drawn to the appropriate tensile strength.

Another critical property of the steel filaments for use in the strands 30 is that the total elongation for the wire must be at least 2 percent over a gauge length of 25 centimeters. Total elongation is measured according to ASTM E8M-90a. Preferably, the total elongation ranges from 2 percent to 4 percent. A particularly preferred total elongation ranges from 2.3 to 3.0.

The torsion values for the steel filaments for use in the strand should be at least 20 turns with a gauge length of 200 times the diameter of the wire. Generally, the torsion value ranges from 20 to 100 turns. Preferably, the torsion values range from 30 to 80 turns with a range of from 35 to 55 being particularly preferred. The torsion values are determined according to ASTM Test Method E 558-83 with test lengths of 200 times the diameter of the wire.

Representative of the type of steel filaments that may be used in the strands include the filaments disclosed in SA- 91/2134 having a tensile strength of 3,650 megapascals and a diameter of 0.20 millimeters.

The steel strands 30 of the carcass ply 12 intersect the equatorial plane (EP) of the tire at a angle in the range of from 75° to 105°. Preferably, the steel strands intersect the EP at an angle of from 82 to 98°. When the tire has a single carcass ply and the carcass ply has the steel strands, the preferred range is from 89° to 91°. When the pneumatic tire 10 has two carcass plies, in which one carcass ply having the steel strands, the steel strands of the one carcass ply intersect the EP at a right angle in the range of from 85° to 95° and the cords or filaments of the other carcass ply intersect EP at an opposite or left angle in the range of from 85° to 95°.

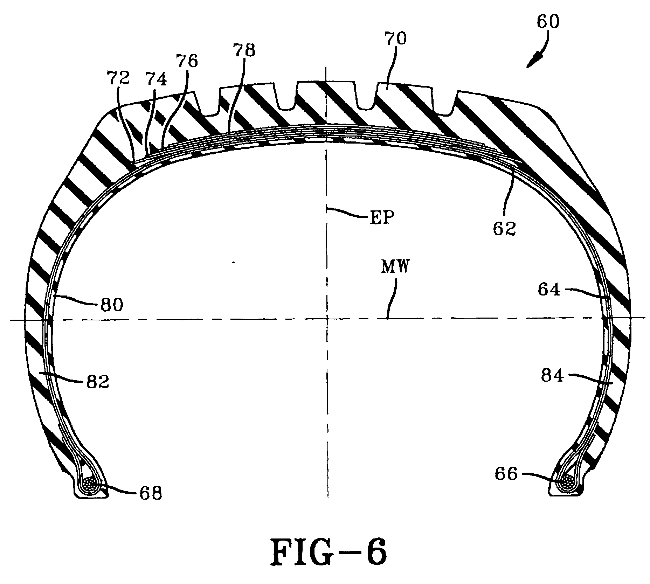

Referring to Figure 6, one embodiment of the present invention is a pneumatic tire 60 having two carcass plies 62,64. In such an embodiment, the steel strands are located in the outer carcass ply 64 with the inner carcass ply 62 being reinforced by an alternative reinforcement. The inner carcass ply 62 may be reinforced with rayon, polyester, nylon, glass, fiber or aramid. The preferred reinforcement is rayon or nylon. The pneumatic tire 10 has a pair of axially spaced-apart annular beads 66,68. The pneumatic tire has a conventional tread 70 disposed on the crown of the tire. In the particular tire 60 of Figure 6, there is shown a belt structure comprising at least four belts 72,74,76,78. Similar to the tire 10 of Figure 2, the tire 60 of Figure 6 if of the tubeless variety may have a substantially air impervious layer 80 that is disposed inwardly of the carcass ply 62 and contiguous to an inflation chamber defined by the volume bounded by the tire 60 and rim assembly (not shown). Elastomeric sidewalls 82,84 are disposed axially outwardly of the carcass structure.

The use of steel strands of untwisted filaments in the carcass ply as disclosed herein may be applied to general passenger radial tires as well as racing tires, agricultural tires, motor cycles, small or medium size truck tires and leisure vehicle tires. Preferably, the pneumatic tires of the present invention are directed to passenger tires and medium to light truck tires.

The pneumatic tires of the present invention may be designed for various load ranges. For example, the load ranges may be A, B, C, D or E. Preferably, the load range is E.

The pneumatic tires of the present invention may also be designated by various prefix letters depending on the designed service conditions requiring different loads and inflations. For example, the tires may be designated by AT, LT, P and ST. Preferably, the pneumatic tire is LT.

A pneumatic radial ply tire according to Figures 1 and 2 was manufactured in the size P235/75R15. The steel strand used in the single carcass ply had four untwisted filaments. Each filament had a tensile strength of 3,950 megapascals, a diameter of 0.22 millimeters and an elongation of 2.2 percent and a torsion value of 50 turns with a gauge length of 200 times the diameter of the steel filament. The steel strands of the carcass ply were oriented at 90° with respect to the equatorial plane. The strands were arranged so as to have 9 ends per inch when measured in a tire circumferential direction at a location having a tire maximum width. The belt structure had two plies of steel cords (2 x 0.30 mm) underlying the tread and having both left and right cord angles of 24° with respect to the equatorial plane of the tire.

For comparative testing, a pneumatic radial tire was manufactured in the size P235/75R15 using polyester cord in the two carcass plies. Other than the rubber to coat the carcass ply reinforcement, all other features of this control tire were the same as the tire using the steel strand. The table below provides some physical properties of each tire and the tire construction of each tire.

TABLE I

| Tire Construction | Polyester Control | Steel Strands |
|---|---|---|
| Carcass Ply Reinforcement | Polyester Cord 1000/2 | Four Untwisted Filaments 0.22 mm 3950 MPa |
| Plies | 2 | 1 |
| EPI at MW | 17 | 9 |
| Cord/Strand Breaking Load (N) | 142 | 600 |
| Cord/Strand Diameter (mm) | 0.56 12.7 | 0.7[2] 12.9 |
| Tire Properties | | |
| Tire Weight (kg) | 12.7 | 12.9 |
| Modulus of Filament (GPa) | 14.0 | 200.0 |
| Percent Strain of Ply Treatment at 20% Break Load | 6.0 | 0.45 |
| Burst (kg/cm$^2$) | 14.8 bead | 20.1 sidewall |
| Plunger Test[1] (Kg-m) | 71.4 | 75.6 |

[1] According to Federal Motor Vehicle Safety Standard (FMVSS109)
[2] Location A of Figure 2

As can be seen from the above data, significant advantages would be realized from use of a carcass ply reinforcement having the modulus values of the steel strand versus the polyester cord. One advantage of the steel strands with untwisted filaments over twisted steel cord is the avoidance of the known loss of strength due to the cabling process.

**Claims**

1. A pneumatic radial tire (10) characterized by

   (a) a pair of axially spaced-apart annular beads (14,16); and
   (b) at least one carcass ply (12) which extends between said beads wherein said carcass ply comprises a layer of steel strands (30) arranged so as to have from 4 to 50 ends per inch when measured in a tire circumferential direction at a location having a tire maximum width (MW),
   each said strand having

   (1) from 2 to 12 filaments (42,44,46,48,50,52);
   (2) the diameter of each filament ranging from 0.05 to 0.4 mm;
   (3) the tensile strength of each filament of at least (3000 MPa -(2000 x D)) x 95 percent where D is the filament diameter in millimeters; and
   (4) the filaments within each strand are not twisted.

2. The pneumatic tire of claim 1 characterized in that each filament (42,44,46,48,50,52) has a total elongation of at least 2 percent over a gauge length of 25 centimeters and a torsion value of at least 20 turns with a gauge length of 200 turns the diameter of the filament.

3. The pneumatic tire (10) of claim 1 characterized in that each filament (42,44,46,48,50,52) has a tensile strength of at least

   (4080 MPa - (2000 x D)) x 95 percent

4. The pneumatic tire (10) of claim 1 characterized in that each filament (42,44,46,48,50,52) has a tensile strength of at least

   (4400 MPa -(2000 x D)) x 95 percent

5. The pneumatic tire (10) of claim 1 characterized in that the number of filaments (42,44,46,48,50,52) in each strand ranges (30) from 3 to 7.

6. The pneumatic tire (10) of claim 1 characterized in that said tire has one carcass ply (12).

7. The pneumatic tire (10) of claim 1 characterized in that said tire has two carcass plies(62,64).

8. The pneumatic tire (10) of claim 7 characterized in that one of said carcass plies (64) is reinforced with said strands and the other carcass ply (62) is not reinforced with said strands.

9. The pneumatic tire (10) of claim 8 characterized in that said carcass ply (62) that is not reinforced with said strands is reinforced with a nonmetallic filament selected from the group of materials consisting of polyester, polyamides and rayon.

10. The pneumatic tire (10) of claim 1 wherein said tire is a passenger tire.

11. The pneumatic tire (10) of claim 1 wherein said tire is a light truck tire.

FIG-1

FIG-2

44

40

46

42

48

50

52

# FIG-3

FIG-4

EP 0 937 587 A2

FIG-5

FIG-6